# FASCICULE DE BREVET EUROPEEN

(11) **EP 0 780 948 B1**
(45) Date de publication et mention de la délivrance du brevet: **03.11.1999**
(21) Numéro de dépôt: 96402767.6
(22) Date de dépôt: 17.12.1996
(51) Int. Cl.: H02G 15/18, H02G 1/14, B29C 63/18

(54) **Dispositif d'expansion radiale d'un manchon élastomère**
Vorrichtung zum radialen Aufweiten einer Elastomermuffe
Device for radial expansion of an elastomeric sleeve

(30) Priorité: 19.12.1995 FR 9515046
(43) Date de publication de la demande: 25.06.1997
(73) Titulaire: SAGEM SA, 75116 Paris (FR)
(72) Inventeur: Tissier, Guy, 77130 St-Germain Laval (FR); Berthellemy, Jean-Pierre, 77130 Montereau (FR)
(74) Mandataire: Fruchard, Guy

(56) Documents cités:
- FR-A- 2 503 476
- GB-A- 1 128 074
- US-A- 4 506 430

## Description

La présente invention concerne un dispositif d'expansion radiale d'un manchon élastomère.

On sait que pour protéger une jonction de câbles il est généralement nécessaire de disposer un manchon protecteur sur la jonction après la réalisation de celle-ci. On connaît actuellement trois techniques de mise en place d'un manchon protecteur. Selon une première technique un manchon en matériau élastomère moulé en usine est enfilé sur le câble préalablement à la réalisation de la jonction puis est ramené en force sur la jonction après réalisation de celle-ci en utilisant une graisse pour favoriser le glissement du manchon protecteur sur la jonction. Cette technique demande des efforts de mise en place importants pour vaincre l'élasticité du manchon protecteur et assurer une expansion de celui-ci pendant son coulissement pardessus la jonction. Afin que l'effort de mise en place ne soit pas trop important tout en assurant un serrage élastique suffisant du manchon sur la jonction il est en outre nécessaire de prévoir plusieurs dimensions de manchons en fonction du câble sur lequel le manchon protecteur doit être monté.

On connaît également des manchons protecteurs en matériau élastique pré-expansés en usine et maintenus dans un état expansé par un dispositif de maintien qui est retiré sur le chantier pour permettre la rétraction élastique du manchon. Ces manchons sont de manipulation assez facile, toutefois après un temps de stockage du manchon à l'état expansé celui-ci perd une partie de son élasticité et il existe donc un risque de mauvaise rétraction du manchon protecteur lors du retrait des organes de maintien.

On connaît par ailleurs du document GB 1,128,074 un dispositif d'expansion radiale d'un manchon en matière élastique comprenant un organe de guidage cylindrique rigide destiné à recevoir le manchon à expanser, et un organe d'expansion radiale tubulaire unique adapté à coulisser sur l'organe de guidage. Cet organe d'expansion unique provoque une expansion du manchon de son diamètre initial à son diamètre final en une seule opération. Pour provoquer une expansion satisfaisante il est donc nécessaire d'utiliser un dispositif hydraulique dont la mise en oeuvre ne peut être envisagée sur un chantier de raccordement de câbles.

Selon l'invention on propose un dispositif d'expansion radial d'un manchon en matière élastique comportant un organe de guidage cylindrique rigide et un moyen d'expansion adapté à coulisser sur l'organe de guidage, caractérisé en ce que le moyen d'expansion comporte au moins deux jeux d'organes d'expansion radiale tubulaires rigides emboîtables les uns dans les autres.

Ainsi chaque jeu d'organe d'expansion peut être mis en place à l'intérieur du manchon élastomère en appliquant un effort de faible importance et en assurant une expansion progressive du manchon élastomère le nombre de jeux devant être utilisé étant fonction de l'expansion que l'on souhaite à partir de la dimension de repos du manchon élastomère. Etant donné la faible importance de l'effort nécessaire la mise en place des organes d'expansion peut être effectuée sur un chantier et on évite donc la perte d'élasticité qui résultait antérieurement du stockage du manchon à l'état expansé.

Selon une version avantageuse de l'invention le jeu le plus interne comporte trois organes d'expansion radiale adaptés à se positionner dans le prolongement les uns des autres. L'organe d'expansion médian peut alors être mis en place en usine de sorte que les autres organes d'expansion peuvent être mis en place sur le chantier en appliquant une force plus faible en raison de la faible longueur de ces organes d'expansion radiale.

D'autres caractéristiques et avantages de l'invention apparaîtront encore à la lecture de la description qui suit d'un mode de réalisation particulier non limitatif de l'invention en relation avec les figures ci-jointes parmi lesquelles :
- la figure 1 est une vue en coupe ou en perspective des différents éléments constituant le dispositif d'expansion radiale d'un manchon élastomère selon un mode de réalisation préféré de l'invention,
- la figure 2 est une vue en coupe du dispositif selon l'invention au moment de la mise en place d'un premier jeu d'organes d'expansion radiale,
- la figure 3 est une vue en coupe d'un manchon élastomère après mise en place du premier jeu d'organes d'expansion radiale,
- la figure 4 est une vue en coupe du manchon élastomère après mise en place du second jeu d'organes d'expansion radiale et retrait de l'organe de guidage cylindrique,
- la figure 5 est une vue en coupe du manchon élastomère après retrait du premier jeu d'organes d'expansion radiale.

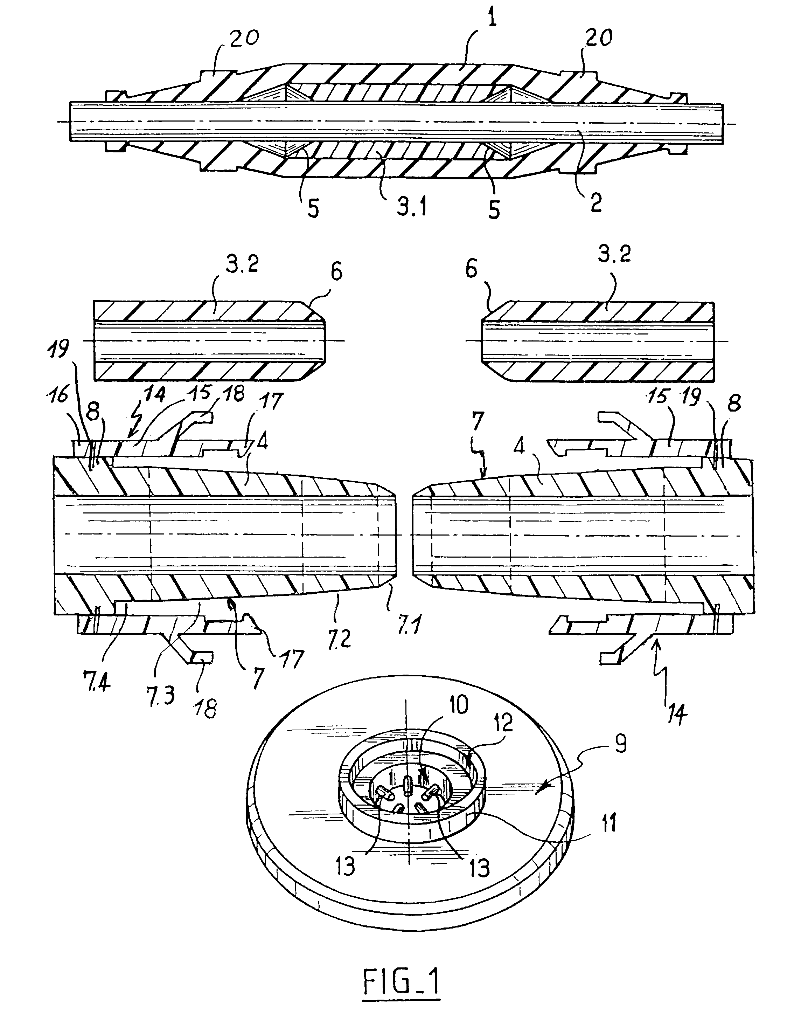

En référence aux figures, le dispositif d'expansion radiale selon l'invention est destiné à être utilisé en relation avec un manchon élastomère 1 réalisé en atelier, par exemple par moulage. Dans le mode de réalisation illustré le manchon élastomère 1 comporte au voisinage de chacune de ses extrémités une collerette annulaire 20 qui s'étend légèrement en saillie. Le dispositif selon l'invention comporte un organe de guidage cylindrique rigide 2, par exemple un tube en matière plastique rigide qui n'a pas été représenté en coupe sur la figure 1 et qui est de préférence mis en place en atelier par un léger emmanchement à force de façon à être retenu dans le manchon élastomère 1 pendant le stockage.

Dans le mode de réalisation particulier illustré le dispositif comporte en outre un premier jeu d'organes d'expansion radiale généralement désigné en 3 et un second jeu d'organes d'expansion radiale généralement désigné en 4. Le premier jeu d'organes d'expansion radiale 3 comporte trois organes d'expansion radiale, un organe d'expansion central portant la référence numérique particulière 3.1 et deux organes d'expansion d'extrémité portant la référence numérique particulière 3.2. L'organe d'expansion central 3.1 a un diamètre interne légèrement supérieur au diamètre externe de l'organe de guidage cylindrique 2 et comporte à ses extrémités des parties coniques 5. L'organe d'expansion radiale 3.1 est de préférence mis en place en atelier ce qui permet de le positionner dans la position médiane du manchon élastomère 1. On notera à ce propos que cette partie médiane du manchon élastomère est destinée à recouvrir la partie de plus grand diamètre de la jonction de câble de sorte que la perte d'élasticité qui risque de résulter du stockage du manchon élastomère 1 est sans importance vis-à-vis des propriétés de serrage élastique qui sont souhaitées pour le manchon protecteur.

Les organes d'expansion radiale 3.2 ont une extrémité conique 6 complémentaire d'une extrémité conique 5 de l'organe d'expansion 3.1 de sorte que lors de la mise en place des organes d'expansion 3.2 comme il sera indiqué plus loin, les organes d'expansion 3.2 s'emboîtent dans les extrémités de l'organe d'expansion 3.1 et constituent avec celui-ci un organe ayant une surface externe cylindrique servant de guide pour le second jeu d'organes d'expansion 4.

Le second jeu d'organes d'expansion 4 comporte deux organes d'expansion ayant chacun une surface interne cylindrique d'un diamètre très légèrement supérieur au diamètre de la surface externe des organes d'expansion 3 du premier jeu, et une surface externe conique généralement désignée en 7 et comportant plusieurs portions 7.1, 7.2, 7.3 et 7.4 de conicité décroissante depuis une extrémité des organes d'expansion 4. A l'extrémité de conicité la plus faible les organes d'expansion 4 comportent une collerette de butée 8 en saillie par rapport à la surface externe 7 de l'organe d'expansion 4.

Selon le mode de réalisation préféré illustré les organes d'expansion 4 comportent en outre des organes de verrouillage portant la référence numérique générale 14. Chacun des organes de verrouillage 14 se présente sous forme d'une barrette élastique 15 ayant une extrémité 16 fixée à la collerette de butée 8 d'un organe d'expansion 4, et une extrémité opposée en forme de crochet 17. Les organes de verrouillage 14 s'étendent selon une direction longitudinale des organes d'expansion 4. Une languette de préhension 18 s'étend en saillie vers l'extérieur. Les barrettes 15 sont fixées par tout moyen approprié à l'organe d'expansion 4, par exemple au moyen d'agrafes 19.

Par ailleurs, le dispositif d'expansion radiale selon l'invention comporte de préférence une embase 9 qui dans ce mode de réalisation comporte un orifice de positionnement central 10 ayant une surface cylindrique de diamètre très légèrement supérieur au diamètre externe des organes d'expansion radiale 3.2, et une collerette de positionnement 11 concentrique à l'orifice de positionnement 10 et comportant une surface interne 12 ayant un diamètre légèrement supérieur au diamètre externe des collerettes de butée 8 des organes d'expansion radiale 4. Des ergots de butée 13 s'étendent radialement à l'intérieur de l'orifice de positionnement 10.

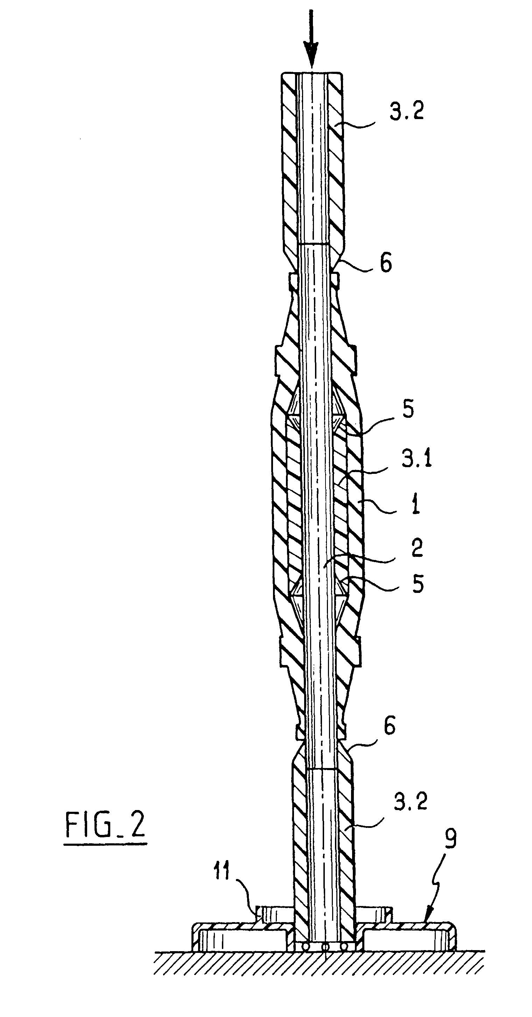

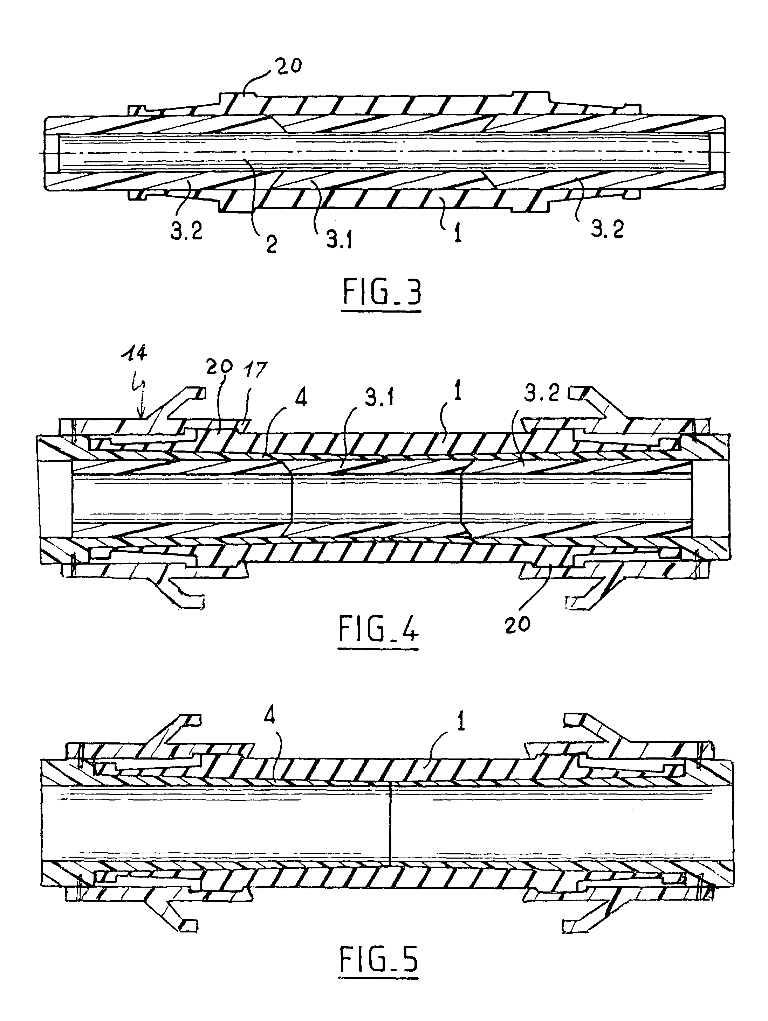

Ainsi qu'il a été indiqué ci-dessus, l'organe d'expansion médian 3.1 du premier jeu d'organes d'expansion radiale et l'organe de guidage cylindrique 2 sont de préférence mis en place en atelier après avoir disposé dans le manchon élastomère 1 une graisse facilitant la mise en place de ces organes. De la graisse de glissement reste ainsi accumulée dans les parties coniques formées par la surface interne du manchon élastomère 1 au voisinage des extrémités de l'organe d'expansion radiale 3.1. Lors de l'expansion du manchon élastomère 1 sur un chantier, l'embase 9 est disposée sur le sol, les organes d'expansion radiale 3.2 sont recouverts de graisse et sont mis en place sur des extrémités de l'organe de guidage cylindrique 2 puis l'un des organes d'expansion 3.2 est engagé dans l'orifice 10 de l'embase 9. Le manchon élastomère 1 et les organes d'expansion radiale sont alors disposés comme illustré sur la figure 2. Une force est appliquée sur l'organe d'expansion radiale 3.2 opposé à l'embase 9 comme indiqué par la flèche en trait épais sur la figure 2, et les organes d'expansion 3.2 pénètrent à l'intérieur du manchon protecteur 1 en provoquant une expansion radiale de celui-ci. Le guidage des organes d'expansion 3.2 facilite la pénétration de ceux-ci à l'intérieur du manchon élastomère 1. Les organes d'expansion 3.2 pénètrent dans le manchon élastomère 1 jusqu'à ce que leurs parties coniques extrêmes s'emboîtent dans les parties coniques correspondantes de l'organe d'expansion radiale 3.1 comme illustré par la figure 3. Le premier jeu d'organes d'expansion 3 réalise alors un ensemble cylindrique à l'intérieur du manchon élastomère 1 et constitue à son tour un organe de guidage pour le second jeu d'organes d'expansion 4. Les organes d'expansion 4 sont alors mis en place de façon similaire aux organes d'expansion 3 en montant ceux-ci sur les extrémités des organes d'expansion 3.2 s'étendant en saillie aux extrémités du manchon élastomère 1 puis en disposant l'une des collerettes de butée 8 dans la collerette de positionnement 11 de l'embase 9 et en exerçant une force sur l'extrémité opposée de l'assemblage ainsi réalisé. On remarquera à ce propos que la conicité décroissante des portions coniques de la surface externe du second jeu d'organes d'expansion, qui dans le mode de réalisation illustré est le jeu d'organes d'expansion le plus externe, permet d'assurer un coulissement des organes d'expansion dans le manchon élastomère 1 sans racler la graisse qui a précédemment été introduite dans le manchon. En outre les collerettes de butée 8 sont de préférence disposées à une distance des extrémités libres correspondant à la moitié de la longueur du manchon élastomère 1 de sorte que l'on est assuré que les organes d'expansion 4 pénètrent de façon symétrique dans le manchon élastomère 1. Lors de l'introduction des organes d'expansion 4 les barrettes 15 s'engagent en regard de la surface externe du manchon élastomère 1. Lorsque les crochets 17 atteignent les collerettes 20 ils font légèrement fléchir les barrettes 15 vers l'extérieur de sorte que les crochets 17 sont rappelés élastiquement et s'enclenchent sur les collerettes 20 dès qu'ils sont passés au-delà de celles-ci. Les organes d'expansion 4 sont ainsi verrouillés dans le manchon élastomère 1.

La figure 4 illustre la vue en coupe du manchon élastomère 1 en position expansée après retrait de l'organe de guidage cylindrique 2 et la figure 5 illustre le manchon élastomère 1 dans la même position après retrait du premier jeu d'organes d'expansion radiale 3. On remarquera que l'on dispose alors d'un passage important à l'intérieur des organes d'expansion radiale 4 ce qui permet d'engager le manchon élastomère 1 sur un câble et de ramener celui-ci sur une jonction après la réalisation de celle-ci. Une traction vers l'extérieur est alors exercée sur les languettes de préhension 15 pour dégager les crochets 17 des collerettes 20 du manchon élastomère 1. Les manchons d'expansion radiale 4 peuvent ainsi être retirés, ce retrait étant facilité par la conicité de la surface externe des organes d'expansion radiale 4. Le retrait des organes d'expansion radiale 4 est de préférence effectué de façon symétrique et permet ainsi une rétraction progressive du manchon élastomère 1 en chassant les bulles d'air vers les extrémités du manchon 1 et en évitant donc d'emprisonner celles-ci sous le manchon élastomère 1.

On remarquera que les organes d'expansion radiale les plus externes, ici le second jeu d'organes d'expansion radiale, ont non seulement une fonction d'expansion mais également une fonction de maintien à l'état expansé du manchon élastomère après le retrait des organes d'expansion radiale les plus internes. Contrairement à la figure 1 où les organes d'expansion radiale 4 ont été représentés avec une épaisseur voisine du jeu d'organes d'expansion 3 pour mieux illustrer la conicité décroissante de la surface externe 7, les manchons d'expansion 4 les plus externes sont de préférence assez minces comme illustré sur les figures 4 et 5 où les épaisseurs relatives ont été mieux respectées.

Bien entendu l'invention n'est pas limitée au mode de réalisation décrit et on peut y apporter des variantes de réalisation sans sortir du cadre de l'invention tel que défini par les revendications.

En particulier, bien que l'invention ait été décrite en relation avec un dispositif d'expansion radiale comportant deux jeux d'organes d'expansion radiale, on peut si cela est nécessaire, prévoir un troisième jeu d'organes d'expansion emboîtable sur le deuxième jeu, le deuxième jeu d'organes d'expansion ayant alors une surface externe cylindrique comme le premier jeu d'organes d'expansion.

Bien que les organes de verrouillage 14 aient été représentés sous forme de barrettes élastiques d'épaisseur sensiblement constante on pourrait prévoir des organes de verrouillage montés de façon articulée sur une bague elle-même montée de façon amovible sur un organe d'expansion afin que les organes de verrouillage soient réutilisables.

## Revendications

1. Dispositif d'expansion radiale d'un manchon en matière élastique (1), comportant un organe de guidage cylindrique rigide (2) et un moyen d'expansion adapté à coulisser sur l'organe de guidage, caractérisé en ce que le moyen d'expansion comporte au moins deux jeux d'organes d'expansion radiale tubulaires rigides emboîtables les uns dans les autres (3, 4).

2. Dispositif d'expansion radiale selon la revendication 1, caractérisé en ce que le jeu d'organes d'expansion radiale (3) le plus interne comporte trois organes d'expansion radiale adaptés à se positionner dans le prolongement les uns des autres.

3. Dispositif d'expansion radiale selon la revendication 2, caractérisé en ce que les organes d'expansion radiale (3) ont des extrémités (5, 6) emboîtables.

4. Dispositif d'expansion radiale selon la revendication 1, caractérisé en ce que les organes d'expansion radiale du jeu (4) le plus externe comprennent une collerette de butée (8).

5. Dispositif d'expansion radiale selon la revendication 1, caractérisé en ce que les organes d'expansion radiale du jeu (4) le plus externe comportent une surface externe conique (7).

6. Dispositif d'expansion radiale selon la revendication 5, caractérisé en ce que la surface externe conique comporte plusieurs portions (7.1, 7.2, 7.3, 7.4) de conicité décroissante.

7. Dispositif d'expansion radiale selon la revendication 1, caractérisé en ce qu'il comporte une embase (9) comprenant au moins un organe de positionnement (10, 11) d'un des organes d'expansion radiale (3, 4).

8. Dispositif d'expansion radiale selon la revendication 1, caractérisé en ce que les organes d'expansion radiale du jeu (4) le plus externe comportent des organes de verrouillage (14).

9. Dispositif d'expansion radiale selon la revendication 8, caractérisé en ce que les organes de verrouillage (14) comprennent des barrettes élastiques (15) ayant une extrémité (16) fixée à un organe d'expansion radiale et une extrémité opposée en forme de crochet (17).

10. Dispositif d'expansion radiale selon la revendication 9, caractérisé en ce que les organes de verrouillage comportent des languettes de préhension (18).

## Patentansprüche

1. Vorrichtung zum radialen Aufweiten einer Muffe (1) aus elastischem Material, mit einem steifen zylindrischen Führungsorgan (2) und einem Mittel zum Aufweiten, das dazu geeignet ist, auf dem Führungsorgan zu gleiten, dadurch **gekennzeichnet**, daß das Mittel zum Aufweiten mindestens zwei Sätze (3, 4) steifer rohrförmiger Organe zum radialen Aufweiten hat, die ineinandersteckbar sind.

2. Vorrichtung zum radialen Aufweiten nach Anspruch 1, dadurch **gekennzeichnet**, daß der innerste Satz (3) der Organe zum radialen Aufweiten drei Organe zum radialen Aufweiten hat, die dazu geeignet sind, jeweils in der Verlängerung des anderen eingesetzt zu werden.

3. Vorrichtung zum radialen Aufweiten nach Anspruch 2, dadurch **gekennzeichnet**, daß die Organe (3) zum radialen Aufweiten ineinandersteckbare Enden (5, 6) haben.

4. Vorrichtung zum radialen Aufweiten nach Anspruch 1, dadurch **gekennzeichnet,** daß die Organe zum radialen Aufweiten des äußersten Satzes (4) einen Anschlagbund (8) haben.

5. Vorrichtung zum radialen Aufweiten nach Anspruch 1, dadurch **gekennzeichnet**, daß die Organe zum radialen Aufweiten des äußersten Satzes (4) eine kegelförmige Außenfläche (7) haben.

6. Vorrichtung zum radialen Aufweiten nach Anspruch 5, dadurch **gekennzeichnet,** daß die kegelförmige Außenfläche mehrere Abschnitte (7.1, 7.2, 7.3, 7.4) mit einer abnehmenden Konizität hat.

7. Vorrichtung zum radialen Aufweiten nach Anspruch 1, dadurch **gekennzeichnet,** daß sie eine Fußfläche (9) hat, die mindestens ein Element (10, 11) zurn Positionieren eines der Organe (3, 4) zum radialen Aufweiten hat.

8. Vorrichtung zum radialen Aufweiten nach Anspruch 1, dadurch **gekennzeichnet**, daß die Organe zum radialen Aufweiten des äußersten Satzes (4) Verriegelungsorgane (14) haben.

9. Vorrichtung zum radialen Aufweiten nach Anspruch 8, dadurch **gekennzeichnet**, daß die Verriegelungsorgane (14) elastische Stege (15) haben, die ein an einem Organ zum elastischen Aufweiten befestigtes Ende (16) und ein diesem entgegengesetztes Ende in Form eines Hakens haben.

10. Vorrichtung zum radialen Aufweiten nach Anspruch 9, dadurch **gekennzeichnet**, daß die Verriegelungsorgane Greiflaschen (18) haben.

## Claims

1. A device for radially expanding a sleeve (1) of elastomer material, the device comprising a rigid cylindrical guide member (2) and expansion means adapted to slide on the guide member, the device being characterized in that the expansion means comprises at least two sets (3, 4) of rigid tubular radial expansion members engageable in one another.

2. A radial expansion device according to claim 1, characterized in that the innermost set (3) of radial expansion members comprises three radial expansion members adapted to be positioned in line with one another.

3. A radial expansion device according to claim 2, characterized in that the radial expansion members (3) have interfitting ends (5, 6).

4. A radial expansion device according to claim 1, characterized in that the radial expansion members of the outermost set (4) have respective abutment flanges (8).

5. A radial expansion device according to claim 1, characterized in that the radial expansion members of the outermost set (4) have outer surfaces (7) that are conical.

6. A radial expansion device according to claim 5, characterized in that the conical outer surface comprises a plurality of portions (7.1, 7.2, 7.3, 7.4) of decreasing one angle.

7. A radial expansion device according to claim 1, characterized in that it includes a stand (9) having at least one positioning member (10, 11) for positioning one of the radial expansion members (3, 4).

8. A radial expansion device according to claim 1, characterized in that the radial expansion members of the outermost set (4) include locking members (14).

9. A radial expansion device according to claim 8, characterized in that the locking members (14) comprise resilient arms (15) each having one end (16) fixed to a radial expansion member, and an opposite end in the form of a hook (17).

10. A radial expansion device according to claim 9, characterized in that the locking members include release handles (18).
